Europäisches Patentamt

European Patent Office

Office européen des brevets

(11) Veröffentlichungsnummer: **0 264 592**
**A1**

## (12) EUROPÄISCHE PATENTANMELDUNG

(21) Anmeldenummer: 87112614.0

(22) Anmeldetag: 29.08.87

(51) Int. Cl.⁴: **A22C 25/14**

(30) Priorität: 14.10.86 DE 3634965

(43) Veröffentlichungstag der Anmeldung:
**27.04.88 Patentblatt 88/17**

(84) Benannte Vertragsstaaten:
**DE ES FR NL SE**

(71) Anmelder: **NORDISCHER MASCHINENBAU
RUD. BAADER GMBH + CO KG
Geniner Strasse 249
D-2400 Lübeck(DE)**

(72) Erfinder: **Wenzel, Werner, Ing.grad.
Doberanweg 8
D-2400 Lübeck(DE)**

(54) **Vorrichtung zum Entweiden von an ihrem Bauch geschlossenen Fischrümpfen.**

(57) Die Erfindung betrifft eine Vorrichtung zum Entweiden von kleinen Massenfischen. Ausgehend von der Aufgabe, als Endprodukt Fischrümpfe zu erzielen, deren Bauchhöhlen völlig frei von Eingeweiden, aber an ihrem Bauchsaum geschlossen sind, wird vorgeschlagen, den Bauchinhalt vor dem Entfernen zu verflüssigen, und das Loslösen der Eingeweide durch mechanische Einwirkung eines vom Kopfende her in die Bauchhöhle eingefahrenen, rotierenden Ausräumwerkzeuges (13) zu besorgen, welches durch Zuleitung von Wasser an dessen freiem Ende gleichzeitig das besagte Verflüssigen und Ausschwemmen bewerkstelligt.

Fig. 1

EP 0 264 592 A1

## Vorrichtung zum Entweiden von an ihrem Bauch geschlossenen Fischrümpfen

Die Erfindung betrifft eine Vorrichtung zum Entweiden von an ihrem Bauch geschlossenen Rümpfen, insbesondere kleiner Massenfische, wie Sardine, Hering, Iwassi u. ä , wobei das Entfernen der in der Bauchhöhle eingeschlossenen Eingeweide nach Lösen derselben durch mechanische Einwirkung unter Eingriff vom Kopfende her erfolgt, mit einem kontinuierlich angetriebenen, endlos umlaufenden Förderer mit die Fischrümpfe einzeln und unter einheitlicher Lage ihres kopfseitigen Endes aufnehmenden, unter einheitlicher Teilung quer angeordneten Fördermulden, sowie mit in die Bauchhöhle vom Kopfende her einsteuerbaren Mitteln zum Lösen und Entfernen der Eingeweide, bestehend jeweils aus einem rotierenden Ausräumwerkzeug, welches mit mindestens einem, sich radial zu und schraubenförmig längs seiner Achse erstreckenden Flügel versehen ist, dessen Umfangskontur annähernd der im wesentlichen zum Bauchhöhlenende hin sich verjüngenden kegelförmigen Gestalt der Bauchhöhle angepaßt ist.

In der Tradition verankerte Zu-oder Aufbereitungsmethoden von insbesondere Nahrungsmitteln bestimmen oft das Verbraucherverhalten. Diesen Umstand gilt es bei der Entwicklung geeigneter Produktionsverfahren zur industriellen Herstellung solcher Produkte zu berücksichtigen, will man Problemen bei der Vermarktung derselben aus dem Wege gehen. Speziell im russischen Sprachraum bestehen solche Verbrauchergewohnheiten beispielsweise bezüglich eines Fischproduktes, welches in Form von ganzen Fischrümpfen kleiner Massenfische bis etwa 25 cm Gesamtfischlänge als Vollkonserve marktgängig ist. Die Anforderungen an dieses Produkt bestehen darin, daß die Bauchhöhle lediglich durch den Köpfschnitt geöffnet und die Eingeweide aus derselben rückstandslos entfernt sein sollen. Diese Anforderungen sind durch das klassische Nobbingverfahren nicht erfüllbar, da dabei lediglich der Magen-Darmtrakt entfernt wird, insbesondere die Ovarien aber in der Bauchhöhle verbleiben.

Aus der US-PS 1 724 587 ist eine Maschine bekannt, mit welcher das geforderte Produkt herstellbar erscheint. Diese Maschine weist eine dem Erfindungsbetreff entsprechende Anordnung von Maschinenelementen auf, die insbesondere bezüglich des Arbeitsganges Reinigen der Bauchhöhle ein Konzept verwirklicht, welches geeignet sein könnte, die gestellten Anforderungen zu erfüllen. Wie sich beim Einsatz dieser Maschine zeigt, wird dieses Ziel jedoch nicht erreicht, jedenfalls nicht mit der Sicherheit, die erforderlich ist, wenn man bedenkt, daß eine laufende Kontrolle des erzielten Effektes praktisch nicht möglich ist. Die Ursache für die mangelnde Sicherheit liegt darin, daß zwar das Lösen der Eingeweide im wesentlichen gelingt, das Ausräumen jedoch nicht grundsätzlich. Verantwortlich dafur ist die Tatsache, daß die fördernde Wirkung des Ausräumwerkzeuges nur dann sicher zustandekommt, wenn die Eingeweide eine Konsistenz aufweisen, die man als flüssig im weitesten Sinne bezeichnen kann. Insbesondere beim laichbereiten Fisch sind diese Voraussetzungen jedoch infolge des hohen Rogenanteils nicht gegeben, so daß infolge mangelnder Förderwirkung eher eine Verteilung in der Bauchhöhle als ein Ausräumen derselben erfolgt.

Der Erfindung liegt daher die Aufgabe zugrunde, das bekannte Konzept derart zu verbessern, daß die erzeugten Fischrümpfe bei hohem Durchsatz und in verläßlicher Weise frei von jeglichen Eingeweideresten sind.

Diese Aufgabe wird erfindungemäß durch eine Vorrichtung der im Erfindungsbetreff beschriebene Art gelöst, welche dadurch gekennzeichnet ist, daß neben dem die Fördermulden tragenden Förderer, vorzugsweise neben dem Obertrum desselben ein in versetzter Umlaufebene zu diesem synchron umlaufender, die rotierenden Ausräumwerkzeuge tragender endloser Hilfsförderer vorgesehen ist, und daß die Ausräumwerkzeuge jeweils unter der Teilung der Fördermulden angeordnete Hohldornen aufweisen, die unter rotierendem Antrieb relativ zu der Lage der Fördermulden in dren Achsrichtung verschiebbar und jeweils mit einer zentralen Bohrung versehen sind, welche jeweils mit einer Druckwasserquelle in Verbindung stehen.

Die damit erzielbaren Vorteile liegen insbesondere darin, daß eine vom Bauchhöhlenende des Fisches her zum Kopfende hin sich ausbreitende Flüssigkeitssäule entsteht, die einerseits die gelösten Eingeweide durchsetzt und damit verflüssigt und andererseits einen Förderstrom erzeugt, der die Förderwirkung des Ausräumwerkzeuges unterstutzt, bzw. überhaupt ermöglicht.

Bei einer bevorzugten Ausfuhrung des Hohlraumes ist dessen Bohrung axial geschlossen und mit mindestens einem, im wesentlichen radialen und mit der zentralen Bohrung in Verbindung stehenden Durchbruch versehen. Um das Loslösen des Darmes am Anus durch Scherwirkung sicherzustellen, ist der schraubenförmige Flügel in Richtung auf das freie Ende des Hohldornes progressiv steigend ausgebildet, so daß der Flügel im Bereich dieses Endes als reines Scherelement wirksam ist. Das Problem des Anschlusses der Hohldorne an die Druckwasserquelle wird dadurch gelöst, daß die Druckwasserquelle auf einen zentralen, mit dem Hilfsförderer synchron umlaufenden Verteiler geführt ist, dessen einen Verteilerraum umschließender, umlaufender Teil mit Anschlüssen für die Hohlräume der Hohldorne versehen ist, wobei der Verteiler als Drehschieber ausgebildet ist, welcher lediglich die in Aktion befindlichen Hohldorne mit der Druckwasserquelle verbindet.

Die Erfindung wird nachstehend anhand der Zeichnung dargestellten Ausführungsbeispiels erläutert. Es zeigt

Fig. 1 eine Teil-Draufsicht auf eine Fischbearbeitungsmaschine im Bereich der Entweidestation,

Fig. 2 einen Querschnitt durch den Antriebsmechanismus eines Ausräumwerkzeuges,

Fig. 3 einen Querschnitt durch das Ausräumwerkzeug im Bereich seines freien Endes,

Fig. 4 eine ausschnittweise Ansicht des in der Druckwasserzuführung liegenden Verteilers.

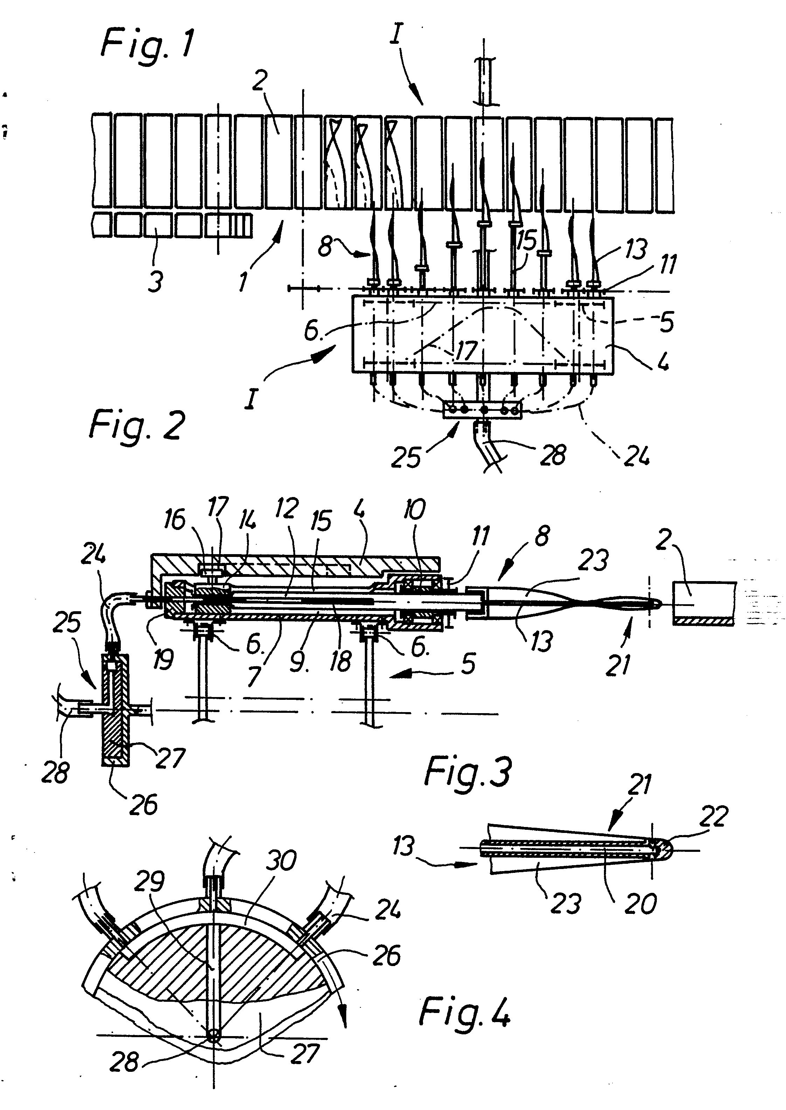

Die erfindungsgemäße Maschine weist entsprechend Fig. 1 einen aus einzelnen Fördermulden 2 bestehenden Förderer 1 auf, welcher die Fische quer zu ihrer Längsachse unter förderndem Abstützen an ihrem Bauch durch die einzelnen, längs des Förderweges angeordneten Bearbeitungszonen führt, von denen hier lediglich die Entweidestation I gezeigt ist. Die Köpfe der Fische sind vor Eintritt in den Bereich dieser Station durch ein geeignetes Werkzeug entfernt worden und die dieselben stützenden, die Fördermulden 2 synchron begleitenden Kopfmulden 3 sind durch entsprechende Umlenkung aus der Förderebene weggetaucht. Im Bereich der Entweidestation I befindet sich ein Entweideaggregat. Es umfaßt einen neben der Bahn der Fördermulden 2, vorzugsweise neben dem Obertrum des Förderers 1 in einem stationären Gehäuse 4 gelagerten, endlosen Hilfsförderer 5, welcher mit dem Förderer 1 synchron umlaufend angetrieben ist. Der Hilfsförderer 5 weist beispielsweise zwei Rollenketten 6 auf, die derart umgelenkt sind, daß ein zu dem Obertrum des Förderers 1 parallel laufender Arbeitstrum entsteht. Die Rollenketten 6 tragen im Abstand der Teilung der Fördermulden 2 zueinander stehende Lagergehäuse 7, in denen jeweils ein Ausräumwerkzeug 8 gelagert ist. Zu diesem Zweck ist jedes Lagergehäuse 7 mit einer durchgehenden, parallel zu der Achse der Fördermulden 2 verlaufenden Ausbohrung 9 versehen, die in ihrem den Fördermulden 2 zuweisenden Teil die Lagerung für eine Hohlwelle 10 aufnimmt, die als Vielkeil-oder K-Profil-Hülse ausgebildet ist und an ihrem den Fördermulden 2 zuweisenden Teil ein Kettenritzel 11 trägt. Dieses greift in einen in geeigneter Weise angeordneten und angetriebenen Kettenstrang und ist somit in der Lage, die Hohlwelle 10 anzutreiben. Diese wird von einer Rohrwelle 12 durchdrungen, die an ihrem aus dem Lagergehäuse 7 herausragenden freien Ende den eigentlichen, als Hohldorn 13 ausgestalteten Ausräumer verdrehsicher trägt und einen dem der Hohlwelle 10 entsprechenden Querschnitt aufweist. Das in dem Lagergehäuse 7 befindliche andere Ende der Rohrwelle 12 ist mit einer zylindrischen Absetzung versehen, die einen Kulissenstein 14 drehbar gelagert aufnimmt. Dieser ist in einem Schlitz 15 des Lagergehäuses 7 drehsicher geführt und mit einer aus diesem herausragenden, um eine zu der Achse der Rohrwelle 12 senkrechte Achse gelagerten Spurrolle 16 bestückt, die in einer Kanalkurve 17 des Gehäuses 4 geführt ist. In das Zentrum der Rohrwelle 12 ragt ein Zulaufrohr 18, welches gehäusefest gehalten und in einem Abschlußstopfen 19 der Rohrwelle 12 geführt ist. Der Hohldorn 13 ist entsprechend Fig. 3 mit einer sich axial erstreckenden Bohrung 20 ausgestattet, die an ihrem freien Ende 21 durch ein halbkugelartiges Endstück 22 verschlossen ist. In dessen Bereich sind die Wandung des Hohldornes 13 durchdringende radiale Durchbrüche angeordnet, die mit der Bohrung 20 in Verbindung stehen. Längs der Achse des Hohldornes 13 und radial aufragend erstreckt sich ein schraubenförmig um diesen gewundener Flügel 23, dessen Umfangskontur unter Drehung einen annähernd kegelstumpfförmigen Rotationskörper beschreibt. Das Zulaufrohr 18 steht über eine Schlauchleitung 24 mit einem Verteiler 25 in Verbindung, welche an einem mit dem Hilfsförderer 5 synchron umlaufenden Teil 26 angeschlossen ist. Dieser trägt an seinem Umfang soviele Anschlüsse, wie Ausräumwerkzeuge 8 an dem Hilfsförderer 5 montiert sind. Die Anschlüsse sind in einen konzentrischen Verteilerraum geführt, der durch eine gegen Drehung gesicherte Verteilernabe 27 ausgefüllt wird. Diese hat eine zentrale Wasserzuführung 28, die sich innerhalb des Nabenkörpers in einer radialen Bohrung 29 fortsetzt, die in einem, über einen bestimmten Zentriwinkel sich erstreckenden Umfangskanal 30 mündet. Dieser Winkel ist dabei so gewählt, daß mindestens mehrere der jeweils aktiven Ausräumwerkzeuge 8 mit der Druckwasserquelle verbunden sind.

Die Wirkungsweise der Vorrichtung ist folgende: Die zu bearbeitenden Fische gelangen beispielsweise mittels einer Beschickeinrichtung einer Ausführung gemäß DE-PS 32 29 502 einzeln in die Fördermulden 2, wobei sie mit dem Kopf zur Kopfmulde 3 und dem Bauch zur fördernden Schulter der Fördermulde 2 ausgerichtet sind. Nach Einstellung der gewünschten Köpflage, vorzugsweise mit Hilfe einer Einstellvorrichtung gemäß der DE-PS 32 46 759 erfolgt das Köpfen mittels einer in üblicher Weise ausgeführten Köpfeinrichtung, so daß die Fische geköpft und unter einheitlicher Lage ihrer Köpfschnittflächen in die hier in Rede stehende Entweidestation I gelangen. Spätestens dort wird eine nicht gezeigte reibschlüssig wirkende Niederhaltevorrichtung wirksam, die das Verschieben der Fischrümpfe während des Entweidevorganges behindert Mit fortschreitender Förderung treten die Fischrümpfe in den Wirkbereich der Ausräumwerkzeuge 8 ein, die mit ihren Hohldornen 13 beginnen, unter Rotation in die Bauchhöhlen einzudringen. Im Verlauf dieses Vorganges tritt jedes Ausräumwerkzeug 8 in den Zulaufbereich der Druckwasserquelle, so daß an dem freien Ende 21 des betreffenden Hohldornes 13 Wasser auszutreten beginnt. Schließlich kommt das Endstück 22 desselben an dem Bauchhöhlenende zur Anlage, was bewirkt, daß der Fischrumpf gegen die Haltekraft der Haltevorrichtung mitgenommen und verschoben wird, bis der Hohldorn 13 seine ganz ausgefahrene Stellung erreicht hat. Währenddessen hat der unmittelbar hinter dem Endstück 22 befindliche, steilgängige Teil des Flügels 23 den Darm am Anus abgeschert und eine fortschreitende Verteilung des Wassers in der Bauchhöhle vom Bauchhöhlenende her stattgefunden. Das aufgrund des Wasserzulaufes in seinem Volumen wachsende Gemisch aus Eingeweiden und Wasser nimmt nunden einzig mögliche Ausweg aus der Bauchhöhle, nämlich den zum Kopfende hin, wodurch der Austrag aus derselben erfolgt. Dabei bewirken die von dem schraubenförmigen Flügel 23 ausgehenden mechanischen Kräfte das restlose Ablösen der Eingeweide, so daß ein rückstandsloser Austrag gewährleistet ist.

Liste der benutzten Bezeichnungen

  1 Förderer
  2 Fördermulde
  3 Kopfmulde
  4 Gehäuse
  5 Hilfsförderer
  6 Rollenkette
  7 Lagergehäuse
  8 Ausräumwerkzeug
  9 Ausbohrung
10 Hohlwelle
11 Kettenritzel
12 Rohrwelle
13 Hohldorn
14 Kulissenstein
15 Schlitz
16 Spurrolle
17 Kanalkurve
18 Zulaufrohr
19 Abschlußstopfen

20 Bohrung
21 freies Ende
22 Endstück
23 Flügel
24 Schlauchleitung
25 Verteiler
26 umlaufender Teil
27 Verteilernabe
28 Wasserzuführung
29 Bohrung
30 Umfangskanal

I Entweidestation

**Ansprüche**

1. Vorrichtung zum Entweiden von an ihrem Bauch geschlossenen Rümpfen, insbesondere kleiner Massenfische, wie Sardine, Hering, Iwassi u. ä., wobei das Entfernen der in der Bauchhöhle eingeschlossenen Eingeweide nach Lösen derselben durch mechanische Einwirkung unter Eingriff vom Kopfende her erfolgt, mit einem kontinuierlich angetriebenen, endlos umlaufenden Förderer (1) mit die Fischrümpfe einzeln und unter einheitlicher Lage ihres kopfseitigen Endes aufnehmenden, unter einheitlicher Teilung quer angeordneten Fördermulden (2) , sowie mit in die Bauchhöhle vom Kopfende her einsteuerbaren Mitteln zum Lösen und Entfernen der Eingeweide, bestehend jeweils aus einem rotierenden Ausräumwerkzeug (8) , welches mit mindestens einem, sich radial zu und schraubenförmig längs seiner Achse erstreckenden Flügel (23) versehen ist, dessen Umfangskontur annähernd der im wesentlichen zum Bauchhöhlenende hin sich verjüngenden kegelförmigen Gestalt der Bauchhöhle angepaßt ist, **dadurch gekennzeichnet**, daß neben dem die Fördermulden (2) tragenden Förderer (1) , vorzugsweise neben dem Obertrum desselben ein in versetzter Umlaufebene zu diesem synchron umlaufender, die rotierenden Ausräumwerkzeuge (8) tragender endloser Hilfsförderer (5) vorgesehen ist, und daß die Ausräumwerkzeuge (8) jeweils unter der Teilung der Fördermulden (2) angeordnete Hohldorne (13) aufweisen, die unter rotierendem Antrieb relativ zu der Lage der Fördermulden (2) in deren Achsrichtung verschiebbar sind und jeweils mit einer zentralen Bohrung (20) versehen sind, welche jeweils mit einer Druckwasserquelle in Verbindung stehen.

2. Vorrichtung nach Anspruch 1 , **dadurch gekennzeichnet**, daß die Bohrung (20) im Bereich des freien Endes (21) des Hohldornes (13) axial geschlossen ist und mit mindestens einem, im wesentlichen radialen und mit der zentralen Bohrung (20) in Verbindung stehenden Durchbruch versehen ist.

3. Vorrichtung nach den Anspruchen 1 oder 2, **dadurch gekennzeichnet,** daß der schraubenförmige Flugel (23) in Richtung auf das freie Ende (21) des Hohldornes (13) progressiv steigend ausgebildet ist.

4. Vorrichtung nach einem der Anspruche 1 bis 3, **dadurch gekennzeichnet,** daß die Druckwasserquelle auf einen zentralen, mit dem Hilfsförderer (5) synchron umlaufenden Verteiler (25) geführt ist, dessen einen Verteilerraum umschließender Teil (26) mit Anschlüssen für die Hohlräume (20) der Hohldorne (13) versehen ist.

5. Vorrichtung nach Anspruch 4 **dadurch-gekennzeichnet,** daß der Verteiler (25) als Drehschieber ausgebildet ist, welcher lediglich die in Aktion befindlichen Hohldorne (13) mit der Druckwasserquelle verbindet.

0 264 592

*Fig. 1*

*Fig. 2*

*Fig. 3*

*Fig. 4*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 370 947 (FUNKEY)<br>* Insgesamt * | 1,3 | A 22 C 25/14 |
| A | | 4,5 | |
| | --- | | |
| D,Y | US-A-1 724 587 (ANKER-HOLTH)<br>* Insgesamt * | 1,3 | |
| | --- | | |
| Y | US-A-1 853 328 (YOUMAN)<br>* Insgesamt * | 1,3 | |
| | --- | | |
| A | EP-A-0 115 669 (YOUNG)<br>* Seite 5, Zeile 8 - Seite 7, Zeile 21 * | 2,3 | |
| | --- | | |
| A | US-A-1 828 725 (MULLER)<br>--- | | |
| A | US-A-1 900 267 (YOUMAN)<br>--- | | |
| A | US-A-1 926 417 (YOUMAN)<br>--- | | RECHERCHIERTE SACHGEBIETE (Int. Cl.4) |
| A | US-A-2 245 329 (DANIELSSON)<br>--- | | A 22 C |
| A | DE-A-3 111 567 (MARKOV)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 21-01-1988 | DE LAMEILLIEURE D. |